# EUROPEAN PATENT APPLICATION

(11) **EP 1 840 141 A1**
(43) Date of publication of application: **03.10.2007**
(21) Application number: 06112117.4
(22) Date of filing: 31.03.2006
(51) Int. Cl.: C08F 10/00, C08F 10/02, C08F 4/00, C08F 2/00

(54) **Process to kill a catalysed olefin polymerization**

(71) Applicant: TOTAL PETROCHEMICALS RESEARCH FELUY, 7181 Seneffe (Feluy) (BE)
(72) Inventor: Miserque, Olivier, B-1435, Mont-Saint-Guibert (BE); Brusselle, Alain, B-2610, Wilrijk (BE); Warichet, Vincent, 1140 Evere (BE)

(57) **Abstract**

Process to kill a continuous catalyzed olefin liquid phase polymerization in which the catalyst is a Ziegler-Natta or a metallocene catalyst, wherein, a predetermined amount of killing agent is injected into the reactor during at least twice the cycle time of the reactor.

## Description

### [Field of the invention]

This invention generally pertains to the field of olefin polymerization reactions in liquid phase. More particularly, the present invention is directed to a process to terminate the reaction, especially in an emergency situation. More particularly the present invention concerns the catalyzed olefin polymerization with Ziegler-Natta or metallocene catalysts.

### [The prior art and the technical problem]

In olefin polymerization processes which are exothermic, there is a need to be able to terminate the reaction rapidly and effectively in an emergency situation.

EP 630910 describes the use of Lewis Bases (and recites water) to control the activity of an olefin polymerization reaction and, if need be, to substantially terminate the entire reaction completely. Such activity reduction or termination of the reaction by the one or more Lewis Bases can be completely reversed by the simple introduction of additional co-catalyst. It describes gas or liquid phase reactions.

US 5,432,242 decribes a process for preparing olefinic polymers by metallocene catalyzed olefin polymerization in which at least one volatile catalyst kill agent is introduced. A non-volatile catalyst kill agent may also be used in conjunction with the volatile catalyst kill agent. Water may be used as the volatile agent and compounds containing a terminal hydroxy group, oxygen, nitrogen or sulfur may constitute the non-volatile agent. Purified monomer is recycled to the reactor.

US 5,336,738 relates to a process for stopping an olefin polymerization which is carried out in a low pressure gas phase reactor, which process comprises introducing an effective quantity of deactivating agent into the reactor, characterized in that the olefin polymerization is carried out using a chromium oxide catalyst and in that the deactivating agent is selected from oxygen, ammonia, water and carbon monoxide and is introduced over a relatively short period of time. The deactivating agent is preferably introduced into the polymerization reactor in a quantity such that in the reactor the weight ratio of the deactivating agent to the catalyst is at least 0.001. At col 3 lines 8-25 of said prior art is explained : "In practice, the quantity of deactivating agent introduced in the reactor is from 1 to 10 times and preferably from 2 to 3 times the minimum quantity necessary for stopping the olefin polymerization. This minimum quantity can be obtained by previous experimentation performed in a gas phase reactor working with known quantities of catalyst and of deactivating agent. For example it has been found to be possible to stop a gas phase olefin polymerization by introducing into the polymerization reactor per kilogram of catalyst, from 2 to 80 g of oxygen, or at least 2 g and preferably from 10 to 80 g of water, or from 3 to 130 g of carbon monoxide. The deactivating agent is introduced into the reactor over a relatively short period of time typically less than 5 minutes. The period of introduction of the deactivating agent is advantageously as short as possible and is preferably shorter than one minute and more preferably shorter than 30 seconds."

It has now been discovered that a catalyzed olefin polymerization with Ziegler-Natta or metallocene catalysts can be efficiently killed by a killing agent provided that a predetermined amount of said killing agent is injected during at least twice the cycle time of the reactor.

### [Brief description of the invention]

The present invention concerns a process to kill a continuous catalyzed olefin liquid phase polymerization in which the catalyst is a Ziegler-Natta or a metallocene catalyst, wherein, a predetermined amount of a killing agent is injected into the reactor during at least twice the cycle time of the reactor.

### [Detailed description of the invention]

As regards the olefin polymerization in liquid phase this technology is known in itself. Advantageously the process is carried out in loop reactors. "Loop reactors" could be multiple loop reactors. More frequently double loop reactors are of interest. The liquid medium is advantageously a mixture of a solvent which can be isobutane, isohexane, of a catalyst, unreacted monomer and polyolefin. Ziegler-Natta and metallocene catalysts have been already described in many patent applications. The present invention is particularly useful for the polyethylene loop reactors. Such reactors have been described in the following patent applications WO 2006-003144, WO 2005-080449, WO 2005-082944n, WO 2005-080441, WO 2005-080439 and WO 2004-026463.

The cycle time of the reactor is defined as the ratio of the volume of the reactor (V) to (the speed of the reaction medium (v) multiplied by the cross sectionnal area (s) of the reactor). The cycle time is expressed as V / (v x s). Generally in an industrial facility reactors are such as the cycle time is between 5 to 80 secondes. By way of example a reactor designed to produce polyethylene (by way of example HDPE) in a slurry consisting mainly of isobutane has a volume between 10 and 100 m³; Cycle times are around 8 to 50 seconds. By way of example there are 20 m³ reactors having 10 seconds cycle time, 70 m³ reactors having 25 seconds cycle time, 80 m³ reactors having 45 seconds cycle time. The man skilled in the art can determine easily the amount of killing agent to kill the activity of the catalyst. According to a preferred embodiment the killing agent is in liquid form. "Killing agent " means any compound able to stop the polymerization reaction. By way of example Lewis bases can be mentionned. Water and mixtures comprising at least 30%, advantageously 40% by weight of water are preferred. By way of example a 20 m³ reactor needs about 8 to 20 liters and a 60 m³ reactor needs about 15 to 30 liters.

The present invention also relates to a system to inject the killing agent (water) into the reactor comprising at least one storage vessel, means for transferring (hereinafter "the transferring line") the killing agent (water) from the storage vessel to the polymerization reactor, means to maintain said vessel under a pressure higher than the polymerization reactor and such as the transferring line comprises successively from the storage vessel to the reactor at least a restricted orifice and an automatic valve closed in normal operations. The killing agent (water) storage vessel is put under pressure with the help of nitrogen bottles. When killing of the reaction is requested the automatic valve is open during a selected time (at least twice the cycle time of the reactor), the restricted orifice has been designed to get a determined flow rate of the killing agent (water) into the reactor. In a preferred embodiment the storage vessel contains exactly the requested amount of the killing agent (water) to kill the polymerization. When killing of the reaction is requested the automatic valve is opened.

Advantageously the killing agent (water) is injected during between 2 and 10 times the cycle time and preferably between 2 and 6 times the cycle time.

Water may be mixed with any component to prevent freezing in winter or in cold countries. Advantageously water is mixed with isopropanol in proportions 50/50 by weight.

In case of multi loop reactors the killing agent could be injected in all the loops or only in certain loops. Advantageously injection is made in each loop, each loop being considered as an individual reactor.

## Claims

1. Process to kill a continuous catalyzed olefin liquid phase polymerization in which the catalyst is a Ziegler-Natta or a metallocene catalyst, wherein, a predetermined amount of killing agent is injected into the reactor during at least twice the cycle time of the reactor.

2. Process according to claim 1 in which the killing agent is injected during 2 and 10 times the cycle time.

3. Process according to claim 2 in which the killing agent is injected during 2 and 6 times the cycle time.

4. Process according to any one of the preceding claims in which the reactor makes polyethylene.

5. Process according to claim 4 in which the polyethylene is HDPE.

6. Process according to any one of the preceding claims in which the reactor is a loop reactor.

7. Process according to claim 6 in which the reactor is a double loop.

8. Process according to any one of the preceding claims in which the killing agent is a mixture comprising at least 30% by weight of water.

9. Process according to claim 8 in which the killing agent is a water with isopropanol in proportions 50/50 by weight.
